Europäisches Patentamt

European Patent Office

Office européen des brevets

(11) Publication number: **0 427 537 A2**

## EUROPEAN PATENT APPLICATION

(21) Application number: 90312190.3

(51) Int. Cl.5: **G06F 15/70**

(22) Date of filing: 07.11.90

(30) Priority: 09.11.89 GB 8925298

(43) Date of publication of application:
15.05.91 Bulletin 91/20

(84) Designated Contracting States:
DE FR IT NL SE

(71) Applicant: GEC-MARCONI LIMITED
The Grove, Warren Lane
Stanmore, Middlesex HA7 4LY(GB)

(72) Inventor: Coombs, Timothy Arthur
31 Central Drive
St. Albans Hertfordshire, AL4 0UX(GB)

(74) Representative: Waters, Jeffrey et al
GEC Patent Department (Chelmsford Office)
GEC-Marconi Research Centre, West
Hanningfield Road
Great Baddow, Chelmsford, Essex CM2
8HN(GB)

(54) Image tracking.

(57) This invention provides an improved method and apparatus for tracking a selected region of a first image (B) in successive images (C and D) which ensures that no region is identified as corresponding to the selected region to be tracked in a successive image (C) which had prior existence in a earlier image (A) separate from a region in that image known to correspond to the selected region in the first image (B) .

Fig 1.

EP 0 427 537 A2

## IMAGE TRACKING

This invention relates to a method, and apparatus for effecting a method, of tracking an image of an object.

According to a first aspect, this invention provides a method of tracking an image comprising: selecting a region in a first image of a scene which it is desired to track; ascertaining a candidate region in a second image succeeding the first, the parameters of which match those of the selected region more closely than any other region of the second image; and confirming the candidate region as corresponding to the selected region if it matches a region corresponding to the selected region, in an image preceding the second image, more closely than any other region of the preceding image.

According to a second aspect this invention provides apparatus for tracking an image comprising: means for selecting a region in a first image of a scene which it is desired to track; means for ascertaining a candidate region in a second image succeeding the first, the parameters of which match those of the selected region more closely than any other region of the second image; and means for confirming the candidate region if it matches a region corresponding to the selected region, in an image preceding the second image, more closely than any other region of the preceding image.

By employing the present invention it is possible to validate that a region has been correctly tracked from one image to another by comparing the tracked region, or candidate region, with all regions in a preceding image in which the selected region has been positively identified. If the candidate region more closely resembles a region in that preceding image other than the region corresponding to the selected region or a region known to correspond to the selected region, then the candidate region cannot be confirmed, for it is probable that it corresponds to that other region.

Advantageously a region in said preceding image corresponds to the selected region if that region has previously been tracked from said preceding image to the selected region in the first image.

Preferably, if the candidate region is not confirmed, the parameters of the selected region are stored and the process repeated for a further succeeding pair of images, wherein the stored parameters of the selected region of the original first image are considered to be the selected region for the first image of the succeeding pairs of images. In this way if the selected region is not identified and confirmed in the next succeeding image those parameters are carried forward and compared with a further succeeding image. The process being repeated either until the region is located and confirmed, or a predetermined number of iterations are reached and the tracking abandoned.

Preferably the candidate region is confirmed if it matches a region corresponding to the selected region in an image preceding the first image more closely than any other region of said preceding image. This thereby eliminates a problem which arises if the confirming process is based on the first image, wherein if a true target region is found in a succeeding image, but rejected for any reason, then in the next image if the true selected region is found it will be rejected because when the confirmation process is performed then it will reveal the true selected region in the first image separate from the stored parameters and therefore the true target region would again be rejected.

Advantageously each adjacent region to the candidate region, which when summed with the candidate region produces a better match with the selected region than the candidate region alone, is checked for existence remote from the selected region in a preceding image, and if found to so exist is rejected. In this manner any gradual change in shape of the region it is desired to track will be taken account of by the tracking process.

Advantageously any region adjacent to the selected region which remains adjacent to the selected region over more than a set number of images is ascertained and tracked. This enables a target which comprises several regions to be tracked, even if one of the regions originally tracked becomes obscured by another associated region.

Preferably if a partial occlusion of a candidate region is identified the selected region is overlayed upon the partly occluded candidate region, enabling tracking to continue even though there may only be a small portion of the original selected region still showing. If the tracked region is completly occluded then it is preferable to track the occluded region and implement a boundary search for the re-emergence of the tracked region so that if the tracked region does re-emerge then tracking may continue.

Preferably when the original tracked region is lost a boundary search is implemented on every other tracked region for the remergence of the original tracked region. This overcomes the problem of a tracked region which comprises a small part of a larger object being obscured by adjacent regions associated with the larger object.

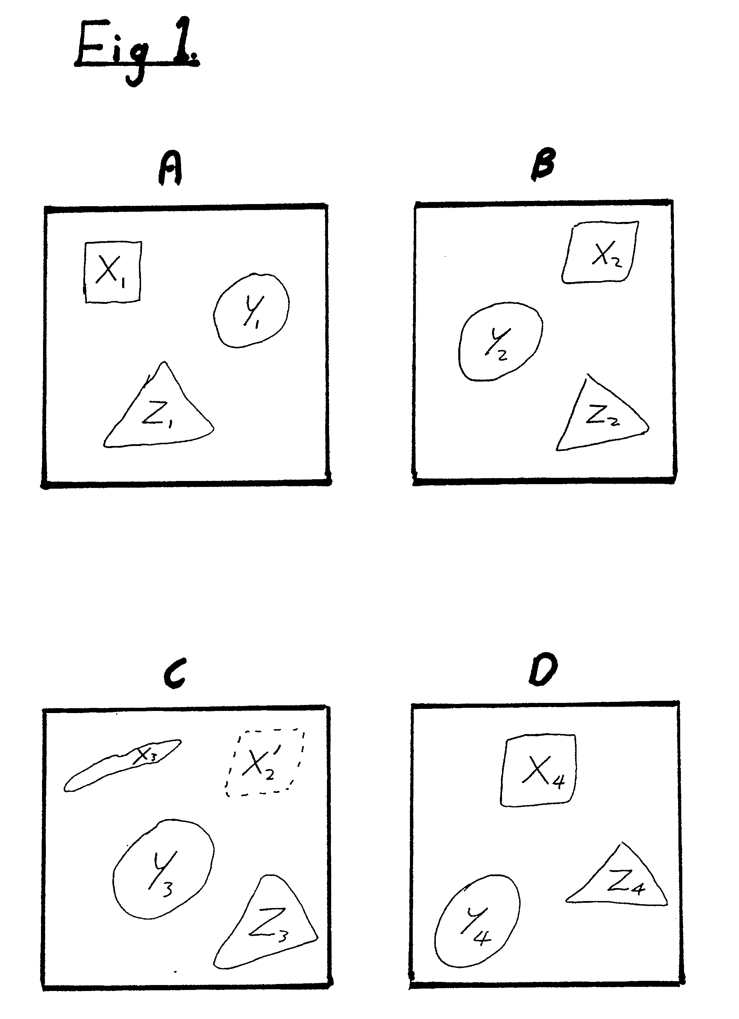

Various aspects of the invention will now be described by way of example only, with reference to figures 1 to 5 of the accompanying drawings. Each of the figures 1 to 5 depicts schematically a series of pixelated images which have been processed by a segmentation technique to provide homogeneous regions, W, X, Y, and Z, for which selected parameters have been determined, for example surface area, circumference, centre of area or intensity value. Such a segmentation processes is described in copending UK application no. 8922851.

Referring now to figure 1, in image A a region, for example $Y_1$, which it is desired to track, has previously been confirmed as corresponding to region $Y_2$ of image B. Image C is scanned for a region the parameters of which match those of the selected parameters of region $Y_2$ closer than any other region of that image C. In this case region $Y_3$ is selected and the region $Y_3$ is classified as a candidate target region. To validate this region as corresponding to region $Y_2$ image A is searched for a region matching the parameters of $Y_3$ more closely than any other region in the image A. In this case $Y_1$ clearly is a closest match to $Y_3$. As $Y_1$ has previously been confirmed as corresponding to region $Y_2$ the, selected region for tracking, $Y_3$ is confirmed. The process then moves on and the image D is searched for the region the selected parameters of which most closely correspond to the region $Y_3$. This time area $Y_4$ is selected, and the confirmation process repeated with reference to image B, and so the process continues.

If the selected region to be tracked is region $X_1$ in image A, and this has been confirmed as corresponding to region $X_2$ in image B, then on searching the next image C region $Y_3$ is classified as the candidate region the parameters of $Y_3$ most closely matching those of region $X_2$, region $X_3$ having been corrupted, possibly by the segmentation process or by partial occlusion such that it no longer resembles the region $X_2$. In order to confirm the region $Y_3$ as corresponding to the region $X_2$ the confirmation process is implemented with respect to image A. The region of image A that most resembles the candidate region $Y_3$ is region $Y_1$. Region $Y_1$ does not correspond to the region $X_1$, which has previously been confirmed as corresponding to the selected region $X_2$. Therefore region $Y_3$ of image C is not confirmed and the parameters of $X_2$ of image B are stored and considered to be the selected parameters of image C, $X'_2$. The process is then repeated and a candidate region is searched for in image D which most closely matches the region $X'_2$. Region $X_4$ is located, and the confirmation process implemented with reference to image B where region $X_2$ is identified. As this region $x_2$ has been confirmed as corresponding to the selected region, region $X_4$ of image D is confirmed.

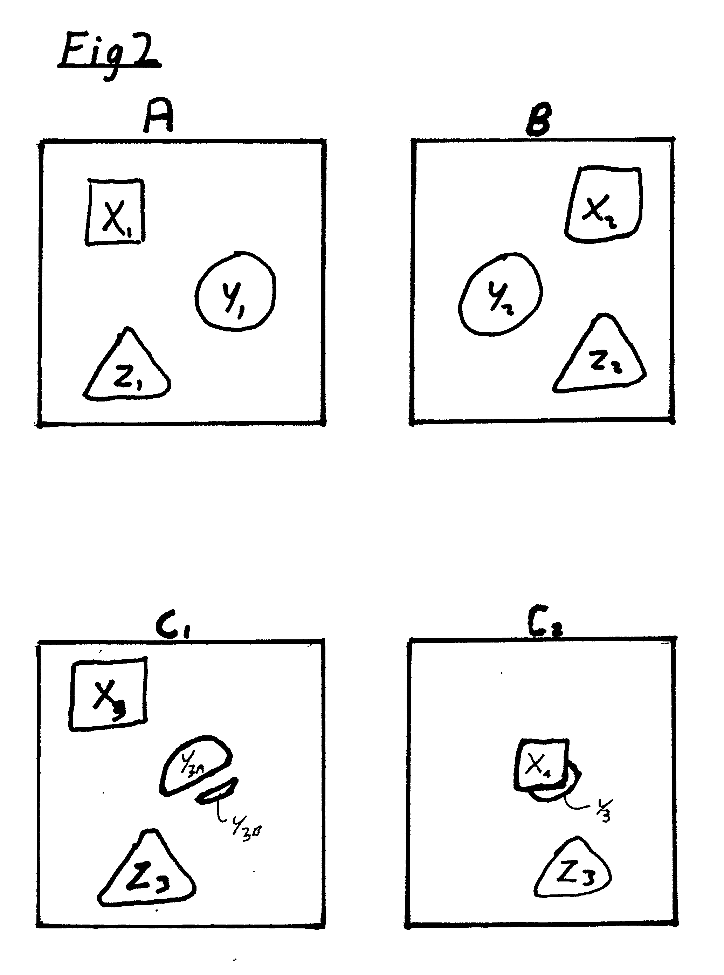

With reference to figure 2, a second embodiment of the invention is illustrated wherein the tracking technique discussed with reference to figure 1 is again implemented, but in this case the additional step is taken of adding each adjacent region in turn to the candidate region and ascertaining if any resultant region produces a better match with the selected region then the candidate region alone. Therefore if region $Y_1$ is tracked as previously described when, in image C1, region $Y_3$ is partly obscured, either by the object image being obscured, or by corruption in the segmentation process, the region $Y_{3A}$ will be selected as a candidate region, this most closely resembling region $Y_2$. When each adjacent region is added to the region $Y_{3A}$ the combination of $Y_{3A}$ and $Y_{3B}$ will most closely resemble the selected region and the confirmation process will be made as previously described to image A. As there is no region in image A corresponding to either the combined region $Y_{3A}$ plus $Y_{3B}$ or region $Y_{3B}$ alone, apart from the region $Y_1$ which is known to correspond to the region $Y_2$, the combined region $Y_{3A}$ plus $Y_{3B}$ will be confirmed as corresponding to the selected region $Y_2$. However if successive images were to be A, B, $C_2$ wherein region X has partially obscured region Y, then $Y_3$ would be tracked, and when adjacent regions were added $Y_3$ and $X_4$ would most closely match the selected region $Y_2$ and therefore be identified as the candidate region. However when the confirmation check is made with reference to image A, a region corresponding to region $X_4$, namely $X_1$ would be identified as having a separate identity to the region $Y_1$ known to correspond to the selected region $Y_2$. Therefore the resultant region $X_4$ plus $Y_3$ would not be confirmed, avoiding erronously tracking region X in further images. Instead the parameters of $Y_2$ will be stored, such that tracking of region Y may continue once regions X and Y no longer overlap.

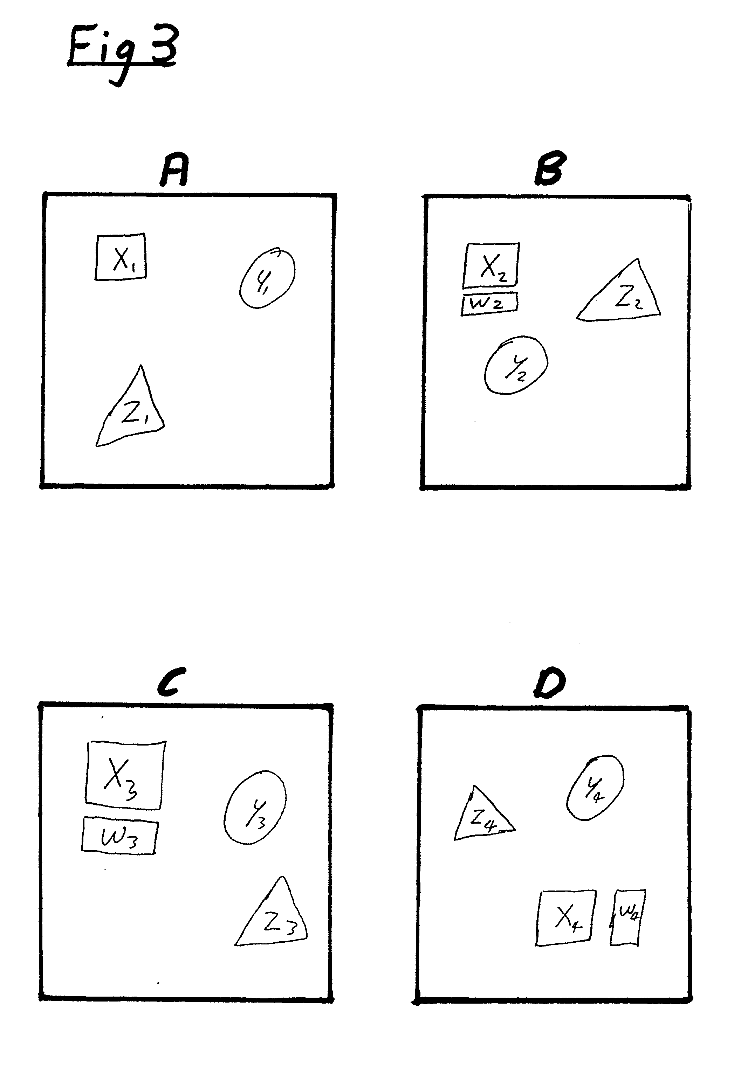

With reference to figure 3, there is schematically illustrated another aspect of the invention, wherein the process referred to with reference to figure 1 includes the additional steps of tracking a region associated with the tracked region such that if region $X_1$ is tracked in image A and region W becomes associated with region X through images B, C, and D, then region W is also tracked.

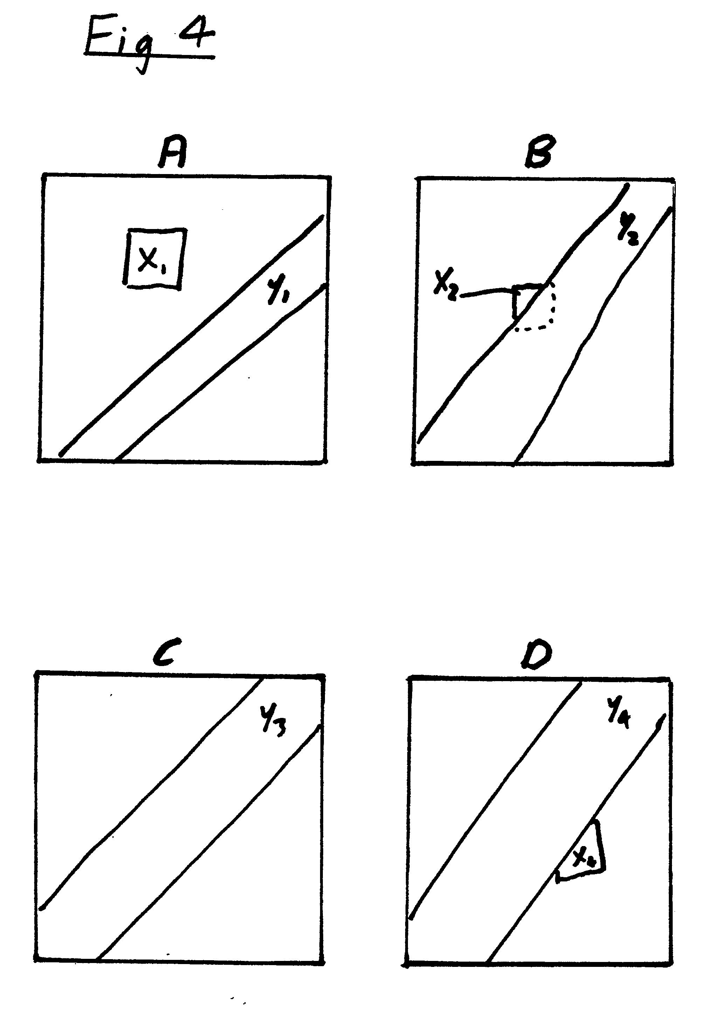

Referring to figure 4 there is schematically illustrated a further aspect of the invention, wherein if when employing the invention as described with reference to figure 1, the tracked region X becomes partially occluded by region Y then the tracked region X is superimposed over that occluding region Y to enable further tracking. If the region X becomes completely occluded by region Y, as in image C then that occluding region Y is tracked and a boundary search implemented for the selected region X. This continues until the region X is detected emerging from the occluding region, as in image D, or until a preset number of images have been searched whereupon the tracking is terminated.

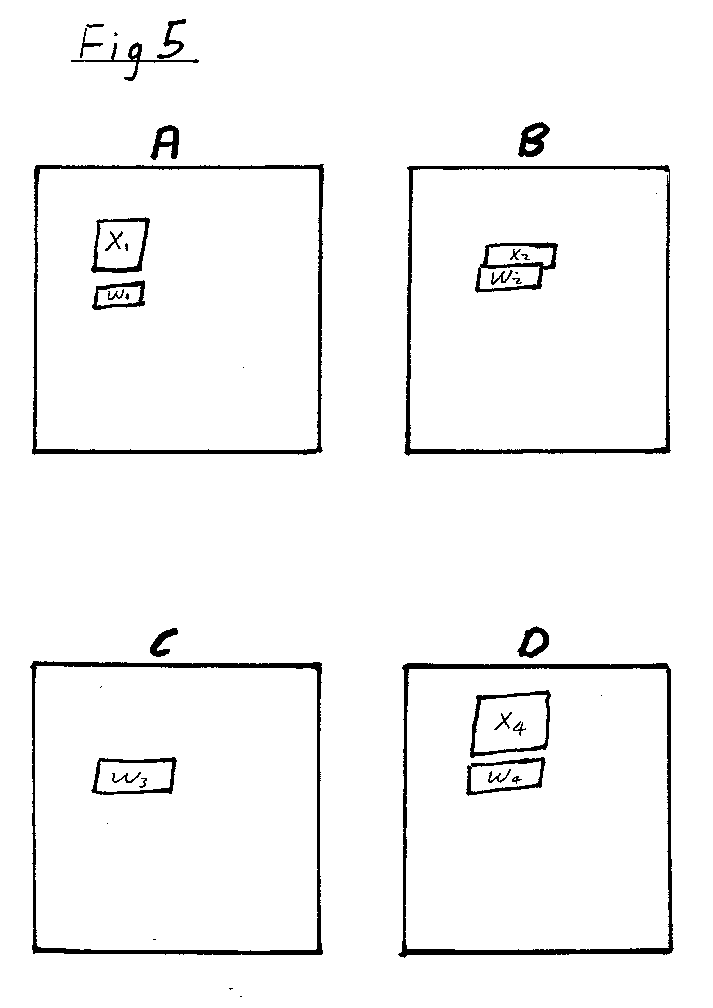

In certain situations where a further region W has been associated with the selected region X over a number of frames as illustrated in figure 5, and the selected region X is occluded by region W as illustrated in images B and C then a boundary search of each tracked region is implemented so that the selected region X can be detected on emergence from behind that other tracked region.

If the imager which is viewing the target is being operated on a non-stabilised platform then it may be subject to sudden jerks or camera shake. The effect of this will be that the target does not appear in the expected position in the field of view. Since "T.V." pictures are interlaced camera shake can be detected and used to pinpoint the position where the target actually appears.

In each field every other line is displayed so field 1 will be line 1, line 3, line 5 etc and field 2 will be line 2, line 4, line 6 etc. Field 1 is displayed first and then field 2.

Since the fields are displayed consecutively the targets position may have changed between successive fields. This will show up a reregistration error. The two fields can be realigned by calculating the mean position of the target pixels in each field and then moving the pixels of one of the fields by the difference in the mean position.

The displacement between the fields is also the rate of motion of the target across the field of view so by calculting the displacement the position of the target may be calculated. Hence the effects of camera shake may be eliminated.

However, since the target pixels approximate brightness is known by taking an area around where the target is expected to be the mean positions can be calculated on the position of the pixels with the correct brightness.

Finally, and as a last resort, the centre of gravity of the target type pixels may be used as a position where to locate the target.

## Claims

1. A method of tracking an image comprising: selecting a region $(X_2)$ in a first image (B) of a scene which it is desired to track; ascertaining a candidate region $(Y_3)$ in a second image (C) succeeding the first, the parameters of which match those of the selected region $(X_2)$ more closely than any other region $(X_3, Z_3)$ of the second image (C); and confirming the candidate region $(Y_3)$ as corresponding to the selected region if it matches a region $(X_1)$ corresponding to the selected region $(X_2)$, in an image (A) preceding the second image (C), more closely than any other region $(Y_1, Z_1)$ of the preceding image (A).

2. A method as claimed in claim 1 wherein a region $(X_1)$ in said preceding image (A) corresponds to the selected region $(X_2)$ if that region has previously been tracked from said preceding image (A) to the selected region $(X_2)$ in the first image (B).

3. A method as claimed in claim 1 or 2, wherein if the candidate region $(Y_2)$ is not confirmed, the parameters of the selected region $(X_2)$ are stored, and the method of claim 1 or 2 repeated for a further succeeding pair of images (C, D), wherein the stored parameters $(X'_2)$ of the selected region of the original first image (B) are considered to be those of the selected region of the succeeding pair of images (C, D).

4. A method as claimed in claim 1, 2 or 3 wherein the candidate region is confirmed if it matches a region corresponding to the selected region in the image preceding the first image, more closely than any other region of said preceding image.

5. A method as claimed in any preceding claim comprising the additional step of adding to the candidate region in turn each adjacent region to the candidate region, ascertaining any resultant region that produces a better match with the selected region than the candidate region alone, checking for the existence of a region corresponding to that adjacent region remote from the selected region in a preceding image, and if no such region is found, confirming that resultant image.

6. A method as claimed in any preceding claim comprising the additional step of ascertaining if any region adjacent to the selected region remains adjacent to the selected region over more than a set number of images, and tracking any such region.

7. A method as claimed in any preceding claim comprising the additional steps of identifying a partial occlusion of a candidate region and overlaying the selected region upon the partly occluded candidate region.

8. A method as claimed in any preceding claim wherein if the tracked region is occluded then that occluded region is tracked and a boundary search implemented for the re-emergence of the tracked region.

9. A method as claimed in claim 6 wherein when the original tracked region is lost a boundary search is implemented of every other tracked region for the re-emergence of the original tracked region.

10. Apparatus for tracking an image comprising: means for selecting a region in a first image of a scene which it is desired to track; means for ascertaining a candidate region in a second image succeeding the first, the parameters of which match those of the selected region more closely than any other region of the second image; and means for confirming the candidate region as corresponding to the selected region if it matches a region corresponding to the selected region, in an image preceding the second image, more closely than any other region of the preceding image.

11. Apparatus as claimed in claim 10 comprising a store in which if the candidate region is not confirmed, the parameters of the selected region are stored.

12. Apparatus as claimed in claim 10 or claim 11 comprising means for confirming the candidate region if it matches a region corresponding to the selected region in an image preceding the first image, more closely than any other region of said image.

13. Apparatus as claimed in claim 10, 11 or 12 comprising additional means for adding to the candidate region in turn each adjacent region to the candidate region, means for ascertaining any resultant region that produces a better match with the selected region than the candidate region alone, means for checking for the existence of a region corresponding to that adjacent region remote from the selected region in a preceding image and means for confirming that resultant region to be the selected region if no such remote region is found to exist.

14. Apparatus as claimed in any of claims 10 to 13 comprising means for ascertaining if any region adjacent to the selected region remains adjacent to the selected region for more than a set number of images, and means for tracking any regions so ascertained.

15. Apparatus as claimed in any of claims 10 to 14 comprising means for identifying a partial occlusion of the matched region and means for over laying the selected region upon the partly occluded matched region.

16. Apparatus as claimed in any of claims 10 to 15 comprising means for tracking an occluding region if the tracked region is occluded and means for implementing a boundary search for the re-emergence of the tracked region.

17. Apparatus as claimed in claim 14 comprising means which when the original tracked region is lost implements a boundary search of every other tracked region for the re-emergence of the original tracked region.

# Fig 1.

A

B

C

D

# Fig 2

# Fig 3

# Fig 4

# Fig 5

### A

$X_1$

$W_1$

### B

$X_2$

$W_2$

### C

$W_3$

### D

$X_4$

$W_4$